# EUROPEAN PATENT SPECIFICATION

(11) **EP 4 484 494 B1**
(45) Date of publication and mention of the grant of the patent: **22.10.2025**
(21) Application number: 23182389.9
(22) Date of filing: 29.06.2023
(51) Int. Cl.: C08L 23/16

(54) **COMPOSITION FOR A COOLING SYSTEM HOSE, HOSE, AND USE THEREOF**
ZUSAMMENSETZUNG FÜR EINEN KÜHLSYSTEMSCHLAUCH, SCHLAUCH UND VERWENDUNG DAVON
COMPOSITION POUR UN TUYAU DE SYSTÈME DE REFROIDISSEMENT, TUYAU ET UTILISATION ASSOCIÉE

(43) Date of publication of application: 01.01.2025
(73) Proprietor: Danfoss A/S, 6430 Nordborg (DK)
(72) Inventor: SASMAZ, Semih, 6430 Nordborg (DK); MUCO, Recep, 6430 Nordborg (DK); CAN KARABULUT, Burcu, 6430 Nordborg (DK); EREN, Müslüm, 6430 Nordborg (DK); AYDEMIR, Sercan, 6430 Nordborg (DK); AKTAS, Ali, 6430 Nordborg (DK)
(74) Representative: Kuhnen & Wacker Patent- und Rechtsanwaltsbüro PartG mbB

(56) References cited:
- EP-A1- 3 390 527
- EP-A1- 3 940 026
- EP-A2- 1 831 329
- US-A- 5 683 773
- US-A1- 2017 130 042
- "Rubber Technology Compounding and Testing for Performance 2nd Edition", 1 January 2009, CARL HANSER VERLAG MUNICH, article JOHN S. DICK: "Rubber Technology Compounding and Testing for Performance 2nd Edition /Passage/", pages: 380-410, 476 - 503, XP055752308

## Description

### Technical field

The present invention refers to a flame resistant/fire resistant and non-conductive rubber composition for a cooling system hose, hose, and use thereof.

### Prior art and problem to be solved

In case of fire, keeping data centers properly working means a challenge. Therefore, flame resistant materials are required for usage in data centers, in particular in cooling system hoses used for data centers. Conventional cooling system hose designs contain cover compounds based on ethylene-propylene-diene monomer which do not have sufficient resistance to flame. Moreover, current designs fail to sufficiently cope with the requirements as regards insulation properties. Even more, conventional polymeric materials mostly fail to pass the flammability requirements according to the UL-94 V-0 standard ("Standard for Safety of Flammability of Plastic Materials for Parts in Devices and Appliances testing", classification V-0, released by Underwriters Laboratories of the United States; "burning stops within 10 seconds on a vertical specimen; drips of particles allowed as long as they are not inflamed" when measured under the defined conditions of the test).

It is therefore an object of the present invention to provide a composition suitable to be applied in a cooling system hose for a data center or other sensitive applications wherein the cooling system hose provides an improved flame resistance and a conductivity that is sufficiently low to ensure the required insulating property. It is further an object to provide a hose, in particular a cooling system hose, containing the inventive composition and fulfilling the requirements as regards flame resistance and non-conductive properties.

### Disclosure of the present invention

The present invention is defined by the subject-matter of the independent claims. Advantageous embodiments of the present invention are subject-matter to the dependent claims.

The present invention suggests a composition for a cooling system hose, wherein the composition contains:
100 parts by weight of an elastomer compound, wherein the elastomer compound contains or consists of a blend of a terpolymer of ethylene, propylene and a diene elastomer and a chlorinated polyethylene
5 to 20 parts by weight of silica;
25 to 50 parts by weight of a kaolinite Al₂Si₂O₅(OH)₄;
20 to 40 parts by weight of chlorinated paraffins;
90 to 120 parts by weight of alumina trihydrate (Al₂O₃•3H₂O);
15 to 30 parts by weight of antimony trioxide; and
5 to 15 parts by weight of zinc borate.

In a preferred embodiment of the present invention, the inventive composition can be limited to the ingredients mentioned above, that is, the inventive composition consists of the following compounds:
100 parts by weight of an elastomer compound, wherein the elastomer compound consists of a blend of a terpolymer of ethylene, propylene and a diene elastomer and a chlorinated polyethylene;
5 to 20 parts by weight of silica;
25 to 50 parts by weight of a kaolinite Al₂Si₂O₅(OH)₄;
20 to 40 parts by weight of chlorinated paraffins;
90 to 120 parts by weight of alumina trihydrate (Al₂O₃•3H₂O);
15 to 30 parts by weight of antimony trioxide; and
5 to 15 parts by weight of zinc borate.

The inventors of the present invention have found in extensive testing sessions that the inventive composition as defined above is chemically resistant to cooling liquids based on glycol and other chemicals relevant in the proposed application. Moreover, the inventive composition provides a sufficiently high resistance of a hose or another container made thereof or by using the inventive composition in terms of high-temperature, fire, flames and electric current. Being nonconductive, the inventive hose protects other equipment in its vicinity against electric shock. Thereby, sparks arising from static electricity that may occur with friction during the flow of the coolant through the hose will be prevented from damaging the data units and other equipment.

For the first time, the present invention combines in one EPDM elastomer material a sufficient non-flammability, that is, fulfilling the requirements of UL-94 V-0 standard, with sufficient nonconductive properties according to ISO 8031:2020. Within the teaching of this invention, "nonconductive" in terms of a material means that the material's electrical resistance (R), having a nominal open-circuit voltage of 500 V D.C, is higher than 10⁶ ohm/m.

Within the inventive composition, the following components are assumed to contribute to the flame retardant characteristics: silica, alumina trihydrate, antimony trioxide, and zinc borate. Particular advantageous is that these flame retardants are halogen-free. Moreover, silica and kaolinite are assumed to contribute to the nonconductive characteristics. In the inventive composition, the chlorinated paraffins represent a process oil further contributing to the flame-retardant properties of the composition.

By combining the components of the inventive composition in the weight ranges as defined in the main claim, the inventive composition represents a well-balanced composition which fulfills even the difficult-to-fulfil standard UL-94 V-0 in terms of nonflammability, and at the same time, is non-conductive according to ISO 8031:2020.

Advantageous embodiments of the present invention are subject-matter of the dependent claims.

In the inventive composition, 100 parts by weight of the elastomer compound may contain a blend of 60 to 70 parts by weight of the terpolymer of ethylene, propylene and the diene elastomer and the remainder may be the chlorinated polyethylene. Therein, the chlorinated polyethylene preferably has a chlorine content from 30 to 40 % by weight, measured according to ISO 1158:1998. Moreover, an ethylene content of the EPDM terpolymer preferably is from 60 to 70 % by weight; and an ethylidene norbornene content of the EPDM terpolymer preferably is from 3 to 5 % by weight.

Adding EPDM terpolymer to the inventive composition improves processing and mechanical characteristics of the composition and of a hose containing said composition. The addition of CPE decreases the fluid resistance for the coolant and improves the flame retardant characteristics of the composition and of a hose containing or consisting of said composition.

In case the ethylene content of the EPDM terpolymer is higher than the upper limit of the range as defined above, the hardness, modulus and tendency to crystallization increase detrimentally. Namely, if the hardness of the resulting hose increases, flexibility of the hose decreases and crystallization increases causing a shrinkage behaviour during moulding. If ethylene content of the EPDM terpolymer is below than the lower limit of the range as defined above, tensile modulus, hardness and green strength properties of compound dramatically decrease, and this makes compound difficult to process and more important one is poor mechanical properties on vulcanizates.

On the other hand, if the content of ethylidene norbornene of the EPDM increases above the upper limit of the range as defined above, elongation and flexibility of vulcanizate decrease, as well as the aging and swelling resistance decreases. If the content of ethylidene norbornene of the EPDM decreases below the lower limit of the range as defined above, it causes an increment of vulcanization time lower modulus values and regression in compression set resistance (permanent deformation resistance).

In the inventive composition, the Mooney viscosity of the EPDM terpolymer may be 60 to 70 Mooney units, measured at 125 °C and according to ISO 289 1-4 (ISO 289-1:2015, ISO 289-2:2020, DIN ISO 289-3:2018-12, ISO/TS 289-4:2017).

In the inventive composition, the silica representing a non-black reinforcement filler may have a surface area of 160 to 200 m²/g, measured according to ISO 9277:2022. In case the surface area is below the lower limit, the oil absorption of the composition may be too low, so that blooming of oils may occur over the time. In case the surface area is higher than the upper limit, proper mixing and dispersion cannot be ensured anymore.

The inventive composition may further contain 5 to 10 parts by weight of magnesium oxide, representing a cross-linking reaction activator and supporting vulcanization.

In the inventive composition, the chlorine content of the chlorinated paraffins may be 40 to 60 % by weight, preferably 45 to 55 %% by weight, in particular 52 % by weight, measured according to BIS IS 14426:1997(R2003). If the chlorine content of the paraffins is in the claimed range, the paraffins represent an effective flame retardant plasticizer.

The inventive composition may further contain at least one, preferably all, of the following components:
1 to 3 parts by weight of a blue organic pigment; which is for colouring purposes;
1 to 3 parts by weight of stearic acid; which is an effective vulcanization activator;
1 to 3 parts by weight of a mixture of high molecular unsaturated fatty acids and zinc salts; these represent processing aids for improving an extrusion process;
5 to 15 parts by weight of titan dioxide; which is for colouring purposes;
5 to 10 parts by weight of triallyl cyanurate; this is a coagent for the peroxide crosslinking ingredient and for vulcanization; and
3 to 10 parts by weight of 2,5-Dimethyl-2,5-di-(tert-butylperoxy)-hexane; this is a peroxide crosslinking vulcanization agent with peroxide curative and causes a high temperature resistance.

The inventive composition may contain one, two, three or more of the above additives, and is not limited to a particular selection, but any combination of the above additives is explicitly part of the present invention.

The inventive composition may further contain a peroxide curative as a vulcanizing agent.

The inventive object is further solved by a hose manufactured of the inventive composition as described herein, wherein preferably a woven, braided or spiral, synthetic or metal fiber reinforcement layer is embedded in the inventive composition.

Moreover, the inventive object is further solved by a hose having a multilayer structure, wherein at least one layer thereof contains or consists of the inventive composition as described herein.

The advantages as outlined above in context with the inventive composition refer to the inventive hoses containing or consisting of the inventive composition as described herein in analog manner.

One advantageous embodiment of the inventive hose may comprise at least three layers, including an outermost cover layer containing or consisting of the inventive composition as described herein; and/or an intermediate layer containing or consisting of the inventive composition as described herein.
In this design, the cover layer provides a resistance to abrasion, ozone, UV, weather for long-time application and flame resistance according to UL94 V-0.

An innermost layer of the inventive hose may contain or consist of the EPDM terpolymer. This layer provides a resistance to glycol-based cooling liquids, other chemicals, and to high temperatures.

A further specified embodiment of the inventive hose may comprise a first reinforcement layer containing or consisting of polyvinyl alcohol, preferably a braided or spiralled yarn made of polyvinyl alcohol; wherein the first reinforcement layer is arranged between the outermost cover layer and the intermediate layer and/or
a second reinforcement layer containing or consisting of a polyvinyl alcohol, preferably a braided or spiralled yarn made of polyvinyl alcohol; wherein the second reinforcement layer is arranged between the intermediate layer and the innermost layer.

Providing at least one reinforcement layer has the advantage of ensuring mechanical resistance to the working pressure of the cooling liquid, and particularly increases the critical pressure at which the hose tends to burst. For this the reinforcement layers can be made of the same material, but also, as obvious for a person skilled in the relevant art, different fire resistant materials and/or structures known in the art can be used. As mentioned above metallic fibres spiral wounded or braided around the elastomeric layer or a braided or spiralled yarn layer made of polyvinyl alcohol can be used as (additional) reinforcement layer in any combination and number reasonable to a person skilled in the relevant art.

The present invention further includes the use of the inventive composition as defined herein as a material or component for a hose or a layer of a hose, or for manufacturing a hose or a layer of a hose, with the hose preferably being a part of a cooling system, e.g., for a data center or other sensitive equipment.

The advantages as outlined above in context with the inventive composition or hose refer to the inventive use of the inventive composition as described herein in analog manner.

In an advantageous embodiment of the inventive use, the hose or the hose layer is at least one, selected from the group, consisting of: an innermost layer, an outermost layer and an intermediate layer of a multilayer structure, the multilayer structure comprising at least three layers.

Moreover, the inventive use as defined herein may be for the purpose of providing flame resistance and/or non-conductivity to the hose or to the layer of the hose.

In the present invention, the flame resistance is defined/measured according to UL 94:2009 V-0 ("Standard for Safety, Tests for Flammability of Plastic Materials for Parts in Devices and Appliances", Vertical Burning Test, V-0 requirement). Moreover, in the present invention, the non-conductivity is defined/measured according to ISO 8031:2020 ("Rubber and plastics hoses and hose assemblies - Determination of electrical resistance and conductivity").

Further applications of the inventive composition or of the hose or pipe containing or made of the inventive composition are covers, coatings or wrappers for cables, pipelines or wires.

### Best practice of the present invention

For the production of the composition, the details of which are given below, the extrusion process is more suitable than the injection process. On the other hand, the wrapping process, which is another method frequently preferred in hose production, is also suitable for production with this composition.

A preferred embodiment of the inventive composition comprises the following:
- 100 parts by weight of an elastomer compound EC consisting of a blend of: 60 to 70 parts of terpolymer of ethylene, propylene, and a diene elastomer and 40 to 30 parts of chlorinated polyethylene, with an ethylene content of the EPDM terpolymer being in the range from 60 to 70 % by weight; with an ethylidene norbornene content of the EPDM terpolymer being from 3 to 5 % by weight and the EPDM terpolymer having a Mooney viscosity of 60 to 70 Mooney units, measured at 125 °C and according to ISO 289 1-4; and with the CPE having a chlorine content of 30 to 40 % by weight;
- 5 to 20 parts by weight of silica having a surface area of 160 to 200 m²/g, measured according to ISO 9277:2022, per hundred parts by weight of the elastomer compound EC;
- 25 to 50 parts by weight of hard clay (measured as kaolinite), per hundred parts by weight of the elastomer compound EC;
- 5 to 10 parts by weight of magnesium oxide as vulcanization crosslinking reaction activator ingredient, per hundred parts by weight of the elastomer compound EC;
- 20 to 40 parts by weight of chlorinated paraffins with a chlorine content of 52 %, measured according to BIS IS 14426:1997(R2003), which acts as process oil and fire retardant, per hundred parts by weight of the elastomer compound EC;
- 90 to 120 parts by weight of alumina trihydrate (Al₂O₃•3H₂O) which acts as halogen-free flame retardant, per hundred parts by weight of the elastomer compound EC;
- 15 to 30 parts by weight of antimony trioxide which acts as halogen-free flame retardant, per hundred parts by weight of the elastomer compound EC;
- 5 to 15 parts by weight of zinc borate which acts as flame retardant, per hundred parts by weight of the elastomer compound EC;
- 1 to 3 parts by weight of blue organic pigment, per hundred parts by weight of the elastomer compound EC;
- 1 to 3 parts by weight of stearic acid which acts as vulcanization activator, per hundred parts by weight of the elastomer compound EC;
- 1 to 3 parts by weight of mixture of high molecular unsaturated fatty acids & zinc salts as processing aids, per hundred parts by weight of the elastomer compound EC;
- 5 to 15 parts by weight of titan dioxide, per hundred parts by weight of the elastomer compound EC;
- 5 to 10 parts by weight of triallyl cyanurate coagent for peroxide crosslinking ingredient, per hundred parts by weight of the elastomer compound EC; and
- 3 to 10 parts by weight of 2,5-Dimethyl-2,5-di-(tert-butylperoxy)-hexane as peroxide crosslinking vulcanizing agent, wherein the vulcanizing agent comprises a peroxide curative, per hundred parts by weight of the elastomer compound EC.

In the following tables, the ingredients of two inventive examples as well as some physical properties thereof are presented:

| **Ingredients/components** | | | **per hundred parts by weight of the elastomer compound EC** | |
|---|---|---|---|---|
| | | | **Example 1** | **Example 2** |
| Ethylene propylene diene monomer (EPDM) | | | 60 | 70 |
| Chlorinated polyethylene (CPE) | | | 40 | 30 |
| Silica | | | 8 | 8 |
| Hard clay, measured as kaolinite | | | 35 | 35 |
| Magnesium oxide | | | 6 | 6 |
| Chlorinated paraffins, chlorine content: 52 % by weight | | | 30 | 30 |
| alumina trihydrate (Al₂O₃•3H₂O) | | | 110 | 110 |
| Antimony trioxide | | | 22 | 22 |
| Zinc borate | | | 6 | 6 |
| Stearic acid | | | 1 | 1 |
| Mixture of high molecular unsaturated fatty acids & zinc salts as processing aids | | | 2 | 2 |
| Blue organic pigment | | | 1.5 | 1.5 |
| Titan dioxide | | | 10 | 10 |
| Triallyl cyanurate | | | 5 | 5 |
| 2,5-Dimethyl-2,5-di-(tert-butylperoxy)-hexane | | | 4.5 | 4.5 |

| **Physical properties** | | | | |
|---|---|---|---|---|
| Hardness (ShA), ASTM D2240-15(2021) | | | 75 | 77 |
| Tensile strength (MPa), DIN EN ISO 527-1:2019-12 | | | 6.5 | 7.3 |
| Elongation at break* (%) | | | 360 | 345 |

| **Ingredients/components** | **per hundred parts by weight of the elastomer compound EC** | | | |
|---|---|---|---|---|
| | **Example 1** | **Example 2** | **Non-Inventive** | **closest prior art** |
| Ethylene propylene diene monomer (EPDM) | 60,00 | 70,00 | 100,00 | - |
| Chlorinated polyethylene (CPE) | 40,00 | 30,00 | - | 22,00 |
| Chloroprene Rubber (CR) | - | - | - | 78,00 |
| Silica | 8,00 | 8,00 | - | - |
| Hard clay, measured as kaolinite | 35,00 | 35,00 | - | - |
| Magnesium oxide | 6,00 | 6,00 | - | 3,00 |
| Chlorinated paraffins, chlorine content: 52 % by weight | 30,00 | 30,00 | 8,00 | 10,50 |
| alumina trihydrate (Al2O3•3H2O) | 110,00 | 110,00 | 50,00 | 135,00 |
| Antimony trioxide | 22,00 | 22,00 | 5,00 | 20,00 |
| Zinc borate | 6,00 | 6,00 | 4,00 | - |
| Stearic acid | 1,00 | 1,00 | 1,00 | - |
| Mixture of high molecular unsaturated fatty acids & zinc salts as processing aids | 2,00 | 2,00 | - | 3,00 |
| Blue organic pigment | 1,50 | 1,50 | - | - |
| Titan dioxide | 10,00 | 10,00 | - | - |
| Triallyl cyanurate | 5,00 | 5,00 | - | - |
| 2,5-Dimethyl-2,5-di-(tert-butylperoxy)-hexane | 4,50 | 4,50 | - | - |
| Zinc Oxide | - | - | 5 | 5,00 |
| Tetramethylthiuram disulphide | - | - | 1 | 1,00 |
| Carbon Black | - | - | 30 | 16,00 |
| Di(morpholin-4-yl) disulphide | - | - | 2 | |
| Zinc dibutyldithiocarbamate | - | - | 1 | |
| Sulphur | - | - | - | 1,50 |

| **Physical properties** | | | | |
|---|---|---|---|---|
| Hardness (ShA), ASTM D2240-15(2021) | 75 | 77 | 79 | 67 |
| Tensile strength (MPa), ISO 37:2017 | 6,50 | 7,30 | 8,20 | 6,50 |
| Elongation at break* (%) | 360,00 | 345,00 | 390,00 | 650,00 |
| Extinguishing time after igniting the first flame (sn) (UL94) | 1,00 | 1,00 | >30 | 1,00 |
| Electrical Resistance (ohm/m) (ISO 8031) | 10⁹ | 10⁹ | 4x10⁶ | 10¹⁰ |

| | | | | |
|---|---|---|---|---|
| * = determined by tensile testing in accordance with ISO 37:2017 | | | | |

As the tables show, both inventive examples have excellent mechanical properties with respect to hardness, tensile strength and elongation at break. Compared to non-inventive compound physical properties are similar with improved flame resistance and non-conductivity. The closest prior art is based on chloroprene rubber (CR) which includes high chlorine content, therefore CR has good flame resistance but is not suitable for glycol based cooling liquids.

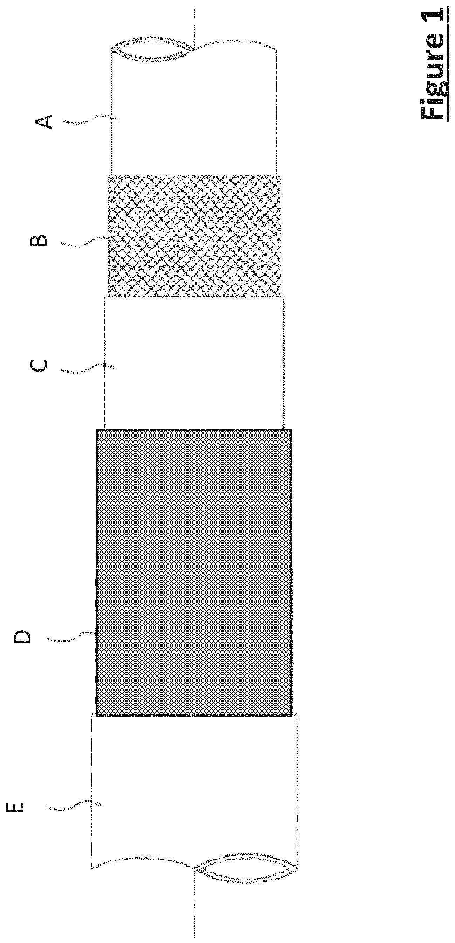

Fig. 1 shows an exemplary embodiment of a fire-resistant data cooling system hose according to the present invention. This hose consists of five layers, the layers consist of (from the inside to the outside):
- A:: inner layer made of EPDM terpolymer;
- B:: second reinforcement layer: e.g. yarn made of polyvinyl alcohol (PVA);
- C:: insulation layer made of the inventive composition;
- D:: first reinforcement layer: e.g. yarn made of polyvinyl alcohol (PVA); and
- E:: outer layer made of the inventive composition;

## Claims

1. A composition for a cooling system hose, the composition containing:
100 parts by weight of an elastomer compound (EC), wherein the elastomer compound (EC) contains a blend of a terpolymer of ethylene, propylene and a diene elastomer (EPDM terpolymer) and a chlorinated polyethylene (CPE);
the composition further containing:
5 to 20 parts by weight of silica;
25 to 50 parts by weight of a kaolinite Al₂Si₂O₅(OH)₄;
20 to 40 parts by weight of chlorinated paraffins;
90 to 120 parts by weight of alumina trihydrate (Al₂O₃•3H₂O);
15 to 30 parts by weight of antimony trioxide; and
5 to 15 parts by weight of zinc borate.

2. The composition according to claim 1, wherein 100 parts by weight of the elastomer compound (EC) contain a blend of 60 to 70 parts by weight of the terpolymer of ethylene, propylene and the diene elastomer (EPDM terpolymer) and the remainder is the chlorinated polyethylene (CPE), with the chlorinated polyethylene (CPE) preferably having a chlorine content from 30 to 40 % by weight, measured according to ISO 1158:1998;
wherein an ethylene content of the terpolymer of ethylene, propylene and the diene elastomer (EPDM terpolymer) preferably is from 60 to 70 % by weight; and
wherein an ethylidene norbornene content of the terpolymer of ethylene, propylene and the diene elastomer (EPDM terpolymer) preferably is from 3 to 5 % by weight.

3. The composition according to claim 1 or 2, wherein the terpolymer of ethylene, propylene and the diene elastomer (EPDM terpolymer) has a Mooney viscosity of 60 to 70 Mooney units, measured at 125 °C and according to ISO 289 1-4.

4. The composition according to one of claims 1 to 3, wherein the silica having a surface area of 160 to 200 m²/g, measured according to ISO 9277:2022.

5. The composition according to one of claims 1 to 4, the composition further containing 5 to 10 parts by weight of magnesium oxide.

6. The composition according to one of claims 1 to 5, wherein a chlorine content of the chlorinated paraffins is 40 to 60 % by weight, preferably 45 to 55 %% by weight, in particular 52 % by weight, measured according to BIS IS 14426:1997(R2003).

7. The composition according to one of claims 1 to 6, the composition further containing at least one of the following components:
1 to 3 parts by weight of a blue organic pigment;
1 to 3 parts by weight of stearic acid;
1 to 3 parts by weight of a mixture of high molecular unsaturated fatty acids and zinc salts;
5 to 15 parts by weight of titan dioxide;
5 to 10 parts by weight of triallyl cyanurate; and
3 to 10 parts by weight of 2,5-Dimethyl-2,5-di-(tert-butylperoxy)-hexane.

8. A hose manufactured of the composition according to one of claims 1 to 7, wherein a braided or spiral, synthetic fiber reinforcement is embedded in the composition.

9. A hose having a multilayer structure, wherein at least one layer thereof contains or consists of the composition according to one of claims 1 to 7.

10. The hose according to claim 8 or 9, comprising at least three layers, including
an outermost cover layer (OML) containing or consisting of the composition according to one of claims 1 to 7; and/or
an intermediate layer (IDL) containing or consisting of the composition according to one of claims 1 to 7.

11. The hose according to claim 10, further comprising
an innermost layer (IML) containing or consisting of the terpolymer of ethylene, propylene and the diene elastomer (EPDM terpolymer).

12. The hose according to claim 11, further comprising
a first reinforcement layer (RF1) containing or consisting of polyvinyl alcohol (PVA), preferably a braided or spiralled yarn made of polyvinyl alcohol (PVA);
wherein the first reinforcement layer (RF1) is arranged between the outermost cover layer (OML) and the intermediate layer (IDL); and/or
a second reinforcement layer (RF2) containing or consisting of a polyvinyl alcohol (PVA), preferably a braided or spiralled yarn made of polyvinyl alcohol (PVA);
wherein the second reinforcement layer (RF2) is arranged between the intermediate layer (IDL) and the innermost layer (IML).

13. Use of the composition according to one of claims 1 to 7 as a material for a hose or a layer of a hose, or for manufacturing a hose or a layer of a hose, with the hose preferably being a part of a cooling system.

14. Use according to claim 13, wherein the hose or the hose layer is at least one, selected from the group, consisting of: an innermost layer (IML), an outermost layer (OML) and an intermediate layer (IDL) of a multilayer structure, the multilayer structure comprising at least three layers.

15. Use according to claim 13 or 14, for providing flame resistance and/or non-conductivity to the hose or to the layer of the hose.

## Patentansprüche

1. Zusammensetzung für einen Kühlsystemschlauch, wobei die Zusammensetzung enthält:
- 100 Gewichtsteile an einer Elastomermischung (EC), wobei die Elastomermischung (EC) ein Gemisch aus einem Terpolymer von Ethylen, Propylen und einem Dienelastomer (EPDM-Terpolymer) und einem chlorierten Polyethylen (CPE) enthält;
wobei die Zusammensetzung ferner enthält:
- 5 bis 20 Gewichtsteile Siliciumdioxid;
- 25 bis 50 Gewichtsteile an einem Kaolinit Al2Si2O5(OH)4;
- 20 bis 40 Gewichtsteile an chlorierten Paraffinen;
- 90 bis 120 Gewichtsteile Aluminiumoxidtrihydrat (Al2O3·3H2O);
- 15 bis 30 Gewichtsteile Antimontrioxid; und
- 5 bis 15 Gewichtsteile Zinkborat.

2. Zusammensetzung nach Anspruch 1, wobei 100 Gewichtsteile der Elastomermischung (EC) ein Gemisch aus 60 bis 70 Gewichtsteilen des Terpolymers von Ethylen, Propylen und dem Dienelastomer (EPDM-Terpolymer) enthalten und der Rest das chlorierte Polyethylen (CPE) ist, wobei
- das chlorierte Polyethylen (CPE) vorzugsweise einen Chlorgehalt von 30 bis 40 Gew.-%, gemessen nach ISO 1158:1998, aufweist;
- ein Ethylengehalt des Terpolymers von Ethylen, Propylen und dem Dienelastomer (EPDM-Terpolymer) vorzugsweise von 60 bis 70 Gew.-% beträgt; und
- ein Ethylidennorbornengehalt des Terpolymers von Ethylen, Propylen und dem Dienelastomer (EPDM-Terpolymer) vorzugsweise von 3 bis 5 Gew.-% beträgt.

3. Zusammensetzung nach Anspruch 1 oder 2, wobei das Terpolymer von Ethylen, Propylen und dem Dienelastomer (EPDM-Terpolymer) eine Mooney-Viskosität von 60 bis 70 Mooney-Einheiten, gemessen bei 125 °C und nach ISO 289 1-4, aufweist.

4. Zusammensetzung nach einem der Ansprüche 1 bis 3, wobei das Siliciumdioxid eine Oberfläche von 160 bis 200 m2/g, gemessen nach ISO 9277:2022, aufweist.

5. Zusammensetzung nach einem der Ansprüche 1 bis 4, wobei die Zusammensetzung ferner 5 bis 10 Gewichtsteile Magnesiumoxid enthält.

6. Zusammensetzung nach einem der Ansprüche 1 bis 5, wobei ein Chlorgehalt der chlorierten Paraffine 40 bis 60 Gew.-%, vorzugsweise 45 bis 55 Gew.-%, insbesondere 52 Gew.-%, gemessen nach BIS IS 14426:1997(R2003), beträgt.

7. Zusammensetzung nach einem der Ansprüche 1 bis 6, wobei die Zusammensetzung ferner wenigstens eine der folgenden Komponenten enthält:
- 1 bis 3 Gewichtsteile an einem blauen organischen Pigment;
- 1 bis 3 Gewichtsteile Stearinsäure;
- 1 bis 3 Gewichtsteile an einem Gemisch von hochmolekularen ungesättigten Fettsäuren und Zinksalzen;
- 5 bis 15 Gewichtsteile Titandioxid;
- 5 bis 10 Gewichtsteile Triallylcyanurat; und
- 3 bis 10 Gewichtsteile 2,5-Dimethyl-2,5-di-(tert-butylperoxy)hexan.

8. Schlauch, hergestellt aus der Zusammensetzung nach einem der Ansprüche 1 bis 7, wobei eine geflochtene oder spiralförmige synthetische Faserverstärkung in der Zusammensetzung eingebettet ist.

9. Schlauch mit einer mehrschichtigen Struktur, wobei wenigstens eine Schicht davon die Zusammensetzung nach einem der Ansprüche 1 bis 7 enthält oder daraus besteht.

10. Schlauch nach Anspruch 8 oder 9, aufweisend wenigstens drei Schichten, einschließlich einer äußersten Deckschicht (OML), die die Zusammensetzung nach einem der Ansprüche 1 bis 7 enthält oder daraus besteht; und/oder eine Zwischenschicht (IDL), die die Zusammensetzung nach einem der Ansprüche 1 bis 7 enthält oder daraus besteht.

11. Schlauch nach Anspruch 10, ferner aufweisend eine innerste Schicht (IML), die das Terpolymer von Ethylen, Propylen und dem Dienelastomer (EPDM-Terpolymer) enthält oder daraus besteht.

12. Schlauch nach Anspruch 11, ferner aufweisend eine erste Verstärkungsschicht (RF1), die Polyvinylalkohol (PVA), vorzugsweise ein geflochtenes oder spiralförmiges Garn aus Polyvinylalkohol (PVA), enthält oder daraus besteht; wobei
- die erste Verstärkungsschicht (RF1) zwischen der äußersten Deckschicht (OML) und der Zwischenschicht (IDL) angeordnet ist; und/oder
- eine zweite Verstärkungsschicht (RF2), einen Polyvinylalkohol (PVA), vorzugsweise ein geflochtenes oder spiralförmiges Garn aus Polyvinylalkohol (PVA), enthält oder daraus besteht;
- die zweite Verstärkungsschicht (RF2) zwischen der Zwischenschicht (IDL) und der innersten Schicht (IML) angeordnet ist.

13. Verwendung der Zusammensetzung nach einem der Ansprüche 1 bis 7 als ein Material für einen Schlauch oder eine Schicht eines Schlauchs oder zur Herstellung eines Schlauchs oder einer Schicht eines Schlauchs, wobei der Schlauch vorzugsweise ein Teil eines Kühlsystems ist.

14. Verwendung nach Anspruch 13, wobei der Schlauch oder die Schlauchschicht wenigstens eine ist, ausgewählt aus der Gruppe bestehend aus: einer innersten Schicht (IML), einer äußersten Schicht (OML) und einer Zwischenschicht (IDL) einer mehrschichtigen Struktur, wobei die mehrschichtige Struktur wenigstens drei Schichten umfasst.

15. Verwendung nach Anspruch 13 oder 14, um dem Schlauch oder der Schicht des Schlauchs Flammfestigkeit und/oder Nichtleitfähigkeit zu verleihen.

## Revendications

1. Composition pour un flexible de système de refroidissement, la composition contenant :
- 100 parties en poids d'un composé élastomère (EC), le composé élastomère (EC) contenant un mélange d'un terpolymère d'éthylène, de propylène et d'un élastomère de diène (terpolymère EPDM) et d'un polyéthylène chloré (CPE) ;
la composition contenant en outre :
- 5 à 20 parties en poids de silice ;
- 25 à 50 parties en poids d'une kaolinite Al2Si2O5(OH)4 ;
- 20 à 40 parties en poids de paraffines chlorées ;
- 90 à 120 parties en poids de trihydrate d'alumine (Al2O3·3H2O) ;
- 15 à 30 parties en poids de trioxyde d'antimoine ; et
- 5 à 15 parties en poids de borate de zinc.

2. Composition selon la revendication 1, dans laquelle 100 parties en poids du composé élastomère (EC) contiennent un mélange de 60 à 70 parties en poids du terpolymère d'éthylène, de propylène et de l'élastomère de diène (terpolymère EPDM) et le reste est le polyéthylène chloré (CPE),
- le polyéthylène chloré (CPE) ayant de préférence une teneur en chlore de 30 à 40 % en poids, mesurée selon la norme ISO 1158:1998 ;
- la teneur en éthylène du terpolymère d'éthylène, de propylène et de l'élastomère de diène (terpolymère EPDM) étant de préférence de 60 à 70 % en poids ; et
- la teneur en éthylidène norbornène du terpolymère d'éthylène, de propylène et de l'élastomère de diène (terpolymère EPDM) étant de préférence de 3 à 5 % en poids.

3. Composition selon la revendication 1 ou 2, dans laquelle le terpolymère d'éthylène, de propylène et de l'élastomère de diène (terpolymère EPDM) a une viscosité Mooney de 60 à 70 unités Mooney, mesurée à 125 °C et selon la norme ISO 289 1-4.

4. Composition selon l'une des revendications 1 à 3, dans laquelle la silice a une surface spécifique de 160 à 200 m²/g, mesurée selon la norme ISO 9277:2022.

5. Composition selon l'une des revendications 1 à 4, la composition contenant en outre 5 à 10 parties en poids d'oxyde de magnésium.

6. Composition selon l'une des revendications 1 à 5, dans laquelle la teneur en chlore des paraffines chlorées est de 40 à 60 % en poids, de préférence de 45 à 55 % en poids, en particulier de 52 % en poids, mesurée selon la norme BIS IS 14426:1997(R2003).

7. Composition selon l'une des revendications 1 à 6, la composition contenant en outre au moins l'un des composants suivants:
- 1 à 3 parties en poids d'un pigment organique bleu ;
- 1 à 3 parties en poids d'acide stéarique ;
- 1 à 3 parties en poids d'un mélange d'acides gras insaturés à haut poids moléculaire et de sels de zinc ;
- 5 à 15 parties en poids de dioxyde de titane ;
- 5 à 10 parties en poids de cyanurate de triallyle ; et
- 3 à 10 parties en poids de 2,5-diméthyl-2,5-di-(tert-butylperoxy)-hexane.

8. Flexible fabriqué à partir de la composition selon l'une des revendications 1 à 7, dans lequel un renforcement en fibres synthétiques tressé ou spiralé est incorporé dans la composition.

9. Flexible à structure multicouche, dans lequel au moins une couche de celui-ci contient ou est constituée de la composition selon l'une des revendications 1 à 7.

10. Flexible selon la revendication 8 ou 9, comprenant au moins trois couches, y compris une couche de couverture la plus à l'extérieur (OML) contenant ou constituée de la composition selon l'une des revendications 1 à 7 ; et/ou une couche intermédiaire (IDL) contenant ou constituée de la composition selon l'une des revendications 1 à 7.

11. Flexible selon la revendication 10, comprenant en outre une couche la plus à l'intérieur (IML) contenant ou constituée du terpolymère d'éthylène, de propylène et de l'élastomère de diène (terpolymère EPDM).

12. Flexible selon la revendication 11, comprenant en outre une première couche de renforcement (RF1) contenant ou constituée d'un poly(alcool vinylique) (PVA), de préférence un fil tressé ou spiralé fait de poly(alcool vinylique) (PVA) ;
- la première couche de renforcement (RF1) étant disposée entre la couche de couverture la plus à l'extérieur (OML) et la couche intermédiaire (IDL) ; et/ou
- une deuxième couche de renforcement (RF2) contenant ou constituée d'un poly(alcool vinylique) (PVA), de préférence un fil tressé ou spiralé fait de poly(alcool vinylique) (PVA) ;
- dans lequel la seconde couche de renforcement (RF2) est disposée entre la couche intermédiaire (IDL) et la couche la plus à l'intérieur (IML).

13. Utilisation de la composition selon l'une des revendications 1 à 7 comme matériau pour un flexible ou une couche d'un flexible ou pour la fabrication d'un flexible ou d'une couche d'un flexible, le flexible faisant de préférence partie d'un système de refroidissement.

14. Utilisation selon la revendication 13, dans laquelle le flexible ou la couche de flexible est au moins l'un des éléments sélectionnés dans le groupe constitué de : une couche la plus à l'intérieur (IML), une couche la plus à l'extérieur (OML) et une couche intermédiaire (IDL) d'une structure multicouche, la structure multicouche comprenant au moins trois couches.

15. Utilisation selon la revendication 13 ou 14, visant à conférer une résistance aux flammes et/ou une non-conductivité au flexible ou à la couche du flexible.
